# EUROPEAN PATENT SPECIFICATION

(11) **EP 3 577 562 B1**
(45) Date of publication and mention of the grant of the patent: **18.11.2026**
(21) Application number: 17895089.5
(22) Date of filing: 06.02.2017
(51) Int. Cl.: G06F 11/26, G07F 19/00, G06Q 20/04, G06Q 20/34

(54) **SIMULATOR FOR SYSTEM TESTING**
SIMULATOR FÜR SYSTEMTESTS
SIMULATEUR POUR TEST DE SYSTÈME

(43) Date of publication of application: 11.12.2019
(73) Proprietor: Visa International Service Association, San Francisco, CA 94128-8999 (US)
(72) Inventor: CHEN, Yuexi, Foster City 94404 (US); DOMINGUEZ, Ben, San Bruno 94066 (US)
(74) Representative: EIP
(86) International application number: PCT/US2017/016719
(87) International publication number: WO 2018/144036

(56) References cited:
- EP-A1- 2 980 732
- US-A1- 2005 097 015
- US-A1- 2005 223 281
- US-A1- 2006 224 919
- US-A1- 2009 294 526
- US-A1- 2011 302 451
- US-A1- 2013 098 984
- US-A1- 2015 363 776
- US-B1- 9 110 496
- REICHSTALLER ANDRÉ ET AL: "Risk-Based Interoperability Testing Using Reinforcement Learning", 4 October 2016, INTERNATIONAL CONFERENCE ON FINANCIAL CRYPTOGRAPHY AND DATA SECURITY; [LECTURE NOTES IN COMPUTER SCIENCE; LECT.NOTES COMPUTER], SPRINGER, BERLIN, HEIDELBERG, PAGE(S) 52 - 69, ISBN: 978-3-642-17318-9, XP047358690
- LAKE C J ET AL: "System 75: GAMUT: A message utility system for automatic testing", AT & T TECHNICAL JOURNAL, AMERICAN TELEPHONE AND TELEGRAPH CO. NEW YORK, US, vol. 64, no. 1, 1 January 1985 (1985-01-01), pages 305 - 320, XP011628769, ISSN: 8756-2324, [retrieved on 20140315], DOI: 10.1002/J.1538-7305.1985.TB00434.X
- CHUANMING JING ET AL: "A Formal Approach to Robustness Testing of Network Protocol with Time Constraints", YOUNG COMPUTER SCIENTISTS, 2008. ICYCS 2008. THE 9TH INTERNATIONAL CONFERENCE FOR, IEEE, PISCATAWAY, NJ, USA, 18 November 2008 (2008-11-18), pages 2168 - 2174, XP031373506, ISBN: 978-0-7695-3398-8
- BERTHIER MAËL ET AL: "Idea: Embedded Fault Injection Simulator on Smartcard", 26 February 2014, SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 222 - 229, ISBN: 978-3-540-74549-5, XP047183621

## Description

### BACKGROUND

There are many types of transaction devices, and each transaction device provides different pieces of information when conducting a transaction. Additionally, the same transaction device may provide different types of information during different transaction scenarios. For example, physical contact-based transactions may involve different communications than contactless communication-based transactions.

It is often desirable to make sure that an access device can correctly process transactions for each type of transaction device and each transaction scenario. This can mean running hundreds or even thousands of test transactions at the access device to ensure total compatibility. Typically a different transaction device with a specific logic and configuration is used for each test transaction.

This presents a problem, as it is costly to create and distribute a batch of test transaction devices to each remotely located access device. Additionally, it is difficult to identify error trends on a global scale, as each transaction is conducted separately in a remote location. Further, a skilled technical operator is needed to manually run each test and make sure everything is working properly.

Embodiments of the invention address these and other problems individually and collectively.

EP 2 980 732 A1 discloses a test robot that receives a test scenario for testing a fare management system using a fare card.

The article "Risk-Based Interoperability Testing Using Reinforcement Learning" by Reichstaller et al (International Conference on Financial Cryptography and Data Security 2016, Springer, Berlin, Heidelberg, pages 52-69) discusses a method that uses behavior models of a system under test and reinforcement learning techniques to break down the criticality of given failure situations to the relevance of single system actions for being tested. Based on this risk assessment, a desired number of test cases is generated which covers as much relevance as possible. The article "GAMUT: A Message Utility System for Automatic Testing" by Lake et al (AT&T Technical Journal, vol. 64, no. 1, 1985) discusses an automated testing tool that can verify message activity in message-based systems.

The article "A Formal Approach to Robustness Testing of Network Protocol with Time Constraints" by Chuanming et al (The 9th International Conference for Young Computer Scientists, pages 2168-2174) discusses robustness training by injecting many invalid messages.

The article "Idea: Embedded Fault Injection Simulator on a Smartcard" by Berthier et al (ESSoS 2014, LNCS 8364, pp 222-229) discusses embedding a fault simulator program into a smartcard to study the functional and side-channel impact of fault injection on a standard algorithm provided by the host smartcard.

### SUMMARY

Embodiments of the invention are directed to a simulation device that simulates different transaction devices and transaction scenarios. The simulation device can replace an entire batch of test transaction devices by simulating the functionality of each transaction device, thereby reducing the cost of generating and distributing a batch of devices. Further, the simulation device may not need to incorporate the actual logic and programming of a transaction device, thereby simplifying the creation of test transactions and reducing the exposure of card logic. Instead, the simulation device can include, for each test transaction, a set of predefined input messages that are mapped to a set of predefined output messages designed to simulate an output from a specific transaction device.

Embodiments of the invention further provide a simulation device that can simulate a malfunctioning transaction device. The simulation device can send messages with incorrect information, bad formatting, or any other suitable error. As a result, the simulation device can test how a computing device, as well as other components in a transaction system, react to a malfunctioning transaction device.

In some embodiments, the simulation device can be remotely loaded with test transaction instructions, and thereby be updated even when in the field. Also, the simulation device can automatically run test transactions and then report any results back to a central computer or testing facility, thereby eliminating the need for a skilled technical operator.

Aspects of the invention are set out in the accompanying claims.

Another embodiment of the invention is directed to a computing device configured to perform the above-described method.

Further details regarding embodiments of the invention can be found in the Detailed Description and the Figures.

### BRIEF DESCRIPTION OF THE DRAWINGS

**FIG. 1** shows a block diagram of a system according to an embodiment of the invention.
**FIG. 2** shows a block diagram of an exemplary access device according to an embodiment of the invention.
**FIG. 3** shows a block diagram of an exemplary simulation device in the form of a card, according to an embodiment of the invention.
**FIG. 4** shows a block diagram of comparative simulation device in the form of a mobile device that falls outside the scope of the invention.
**FIGS. 5A-5B** show a flow diagram illustrating an example of transaction communications, according to embodiments of the invention.
**FIG. 6** shows a flow diagram illustrating an exemplary transaction simulation process, according to embodiments of the invention.

### DETAILED DESCRIPTION

Embodiments of the present invention are directed to a simulation device for simulating a transaction device. The simulation device can interact with an access device to conduct a transaction, sending communications that mimic communications that could be sent by a transaction device. The simulation device can simulate the functionality of one or more types of transaction devices, as well as one or more types of transaction scenarios.

The simulation device can test how an access device acts when one or more transaction devices are used to conduct a transaction. In some embodiments, the simulation device can be remotely loaded with instructions for one or more test transactions. Accordingly, the simulation device can replace an entire batch of special test cards, as well as future updated test cards. Thus, efficiency (e.g., cost and time) is improved for testing an access device's reaction to different transaction devices and scenarios.

Additionally, the simulation device can record information about how an access device and transaction system behave during a test transaction. This data can be provided to a central testing computer or testing facility and analyzed to determine trends and/or systemic issues. This improves trouble shooting and trend recognition.

In some embodiments, the simulation device can simulate a specific transaction device without having the logic and programming that characterizes that specific transaction device. Instead, the simulation device can be loaded with a set of predefined output messages that are the same as or similar to messages that would be sent by the transaction device being simulated. The simulation device can also have a set of predefined input messages. When an access device sends a message to the simulation device, the simulation device can identify a matching predefined input message. The simulation device can determine what predefined output message corresponds to the matched input message, and then send the predefined output message as a response back to the access device. As a result, confidential and/or security sensitive card logic can be protected from exposure, and the process for creating test transaction instructions is simplified.

Embodiments of the invention further enable the simulation device to simulate a malfunctioning transaction device. The simulation device can be programmed to send the wrong type of output message, or a transaction message with the wrong data, missing data, or incorrectly formatted data. As a result, the simulation device can test how an access device reacts to a faulty transaction device, and determine whether the access device behaves as desired in that situation. Further, this type of a negative test case can be simulated using predefined output messages, as explained above. This improves efficiency and reduces workload, as otherwise the foundational card logic would need to be changed to create this type of negative test case.

Prior to discussing specific embodiments of the invention, some terms may be described in detail.

A "simulation device" may include an apparatus that can imitate another device. For example, a simulation device can perform the messaging or other interactions that may typically be performed by another device in the same situation. In some embodiments, a simulation device can appear to function as another device, but may not perform the same internal processes as the simulated device. In some embodiments, a simulation device can simulate multiple types of devices (e.g., payment devices, mobile devices, identity verification devices, etc.).

A "transaction device" may include an apparatus that can interact with another device. For example, a transaction device can interact with an access device in order to conduct a transaction. A transaction device may provide information to the access device in order to pay for a transaction, identify a user, gain access to an area (whether physical or virtual) or protected information, identify or obtain a service or product, or for any other suitable type of transaction. Examples of transaction devices include payment devices, membership devices, access cards, identification devices, and mobile devices.

A "transaction input message" may be a communication received during an interaction. For example, a message sent by an access device may be a transaction input message for a receiving transaction device. One example of a transaction input message is an APDU (application protocol data unit) command.

A "transaction output message" may be a communication sent during an interaction. One example of a transaction output message is an APDU (application protocol data unit) response sent by a transaction device.

A "test transaction" may be an investigative interaction. A test transaction may be conducted to find out information about how a transaction system is functioning. For example, different test transactions can be designed to determine whether or not a transactions will be processed correctly when initiated by different types of transaction devices. A test transaction can involve sending certain types of information during a transaction communication session in order to test how the information is processed. Some test transactions can be designed to check for flaws, and to check the response of an access device or transaction system when a transaction device provides incorrect information for a transaction.

In some embodiments, a test transaction can be completed by executing a set of instructions. A set of instructions can include a set of predefined output messages associated with a set of predefined input message. A "predefined output message" can be an outgoing communication that has been preconfigured or preloaded. A set of predefined output messages may be a list of potential messages for sending. A "predefined input message" can be a known communication that could be received. A set of predefined input messages may be a list of messages that could be received. During a test transaction, when a certain input message is received, a corresponding output message can be sent in response. In other embodiments, instead of sending a predefined message, a new message can be generated. For example, application logic and stored account information can be used to generate a new message based on information received in a command message.

A "transaction report" may include information related to an interaction. A transaction report can have a description of how the transaction was processed, such as information that was sent and received, and whether the transaction was successful. A transaction report can also include notes about problems, missing information, delays, or other issues that took place during a transaction.

A "server computer" may include a powerful computer or cluster of computers. For example, the server computer can be a large mainframe, a minicomputer cluster, or a group of servers functioning as a unit. In one example, the server computer may be a database server coupled to a Web server. The server computer may be coupled to a database and may include any hardware, software, other logic, or combination of the preceding for servicing the requests from one or more client computers.

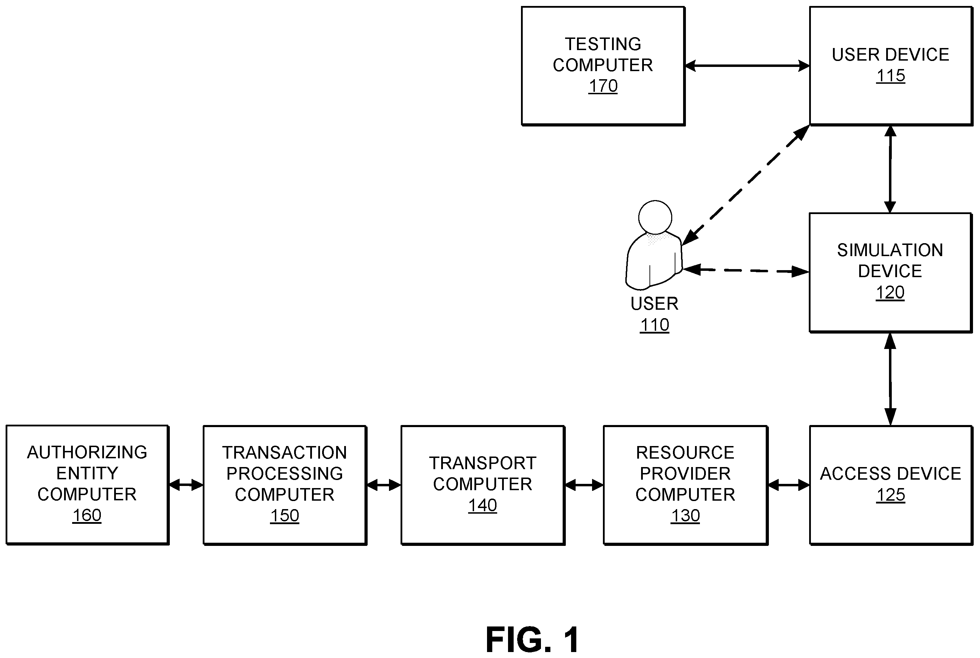

**FIG. 1** shows a system **100** comprising a number of components. The system **100** comprises a user device **115** and a simulation device **120** operated by a user **110.** The system **100** further comprises a resource provider computer **130,** a transport computer **140,** a transaction processing computer **150,** an authorizing entity computer **160,** and a testing computer **170,** each of which may be embodied by one or more computers. The simulation device **120** may be in communication with an access device **125,** which may in turn be in communication with the resource provider computer **130.** Also, the simulation device **120,** the user device **115,** the access device **125,** the resource provider computer **130,** the transport computer **140,** the transaction processing computer **150,** the authorizing entity computer **160,** and the testing computer **170** may all be in operative communication with each other through any suitable communication channel or communications network. Suitable communications networks may be any one and/or the combination of the following: a direct interconnection; the Internet; a Local Area Network (LAN); a Metropolitan Area Network (MAN); an Operating Missions as Nodes on the Internet (OMNI); a secured custom connection; a Wide Area Network (WAN); a wireless network (e.g., employing protocols such as, but not limited to a Wireless Application Protocol (WAP), I-mode, and/or the like); and/or the like.

Messages between the computers, networks, and devices may be transmitted using a secure communications protocols such as, but not limited to, File Transfer Protocol (FTP); HyperText Transfer Protocol (HTTP); Secure Hypertext Transfer Protocol (HTTPS), Secure Socket Layer (SSL), ISO (e.g., ISO 8583) and/or the like.

In some embodiments, the system **100** can be a transaction system. In other words, a transaction can be initiated, processed, and approved using the components in the system **100.** For example, the simulation device **120** can initiate a transaction by interacting with the access device **125** (e.g., by establishing contact or contactless communication). The access device **125** and simulation device **120** exchange one or more messages, such that the access device **125** can obtain transaction data from the simulation device **120.** The access device **125** can provide the transaction data to the resource provider computer **130.** The resource provider computer **130** can then send an authorization request message with the transaction data to the authorizing entity computer **160.** This request can be routed through the transport computer **140** and the transaction processing computer **150.** The authorizing entity computer **160** can authorize the transaction and return an authorization response message to the resource provider computer **130** and access device **125.**

The resource provider computer **130** may be associated with a resource provider, which may be an entity that can provide a resource such as goods, services, information, and/or access. Examples of a resource provider include merchants, access devices, secure data access points, etc. A merchant may typically be an entity that engages in transactions and can sell goods or services, or provide access to goods or services.

The resource provider may accept multiple forms of payment (e.g., a payment card or a mobile device) and may use multiple tools to conduct different types of transactions. For example, the resource provider may operate a physical store and use the access device **125** for in-person transactions.

An access device **125** may be any suitable device for communicating with a resource provider and for interacting with a transaction device. An access device **125** can be in any suitable location such as at the same location as a merchant, and an access device **125** may be in any suitable form. Some examples of access devices include POS devices, cellular phones, PDAs, personal computers (PCs), tablet PCs, hand-held specialized readers, set-top boxes, electronic cash registers (ECRs), automated teller machines (ATMs), virtual cash registers (VCRs), kiosks, security systems, access systems, Websites, and the like. Typically, an access device **125** may use any suitable contact or contactless mode of operation to send or receive data from a transaction device.

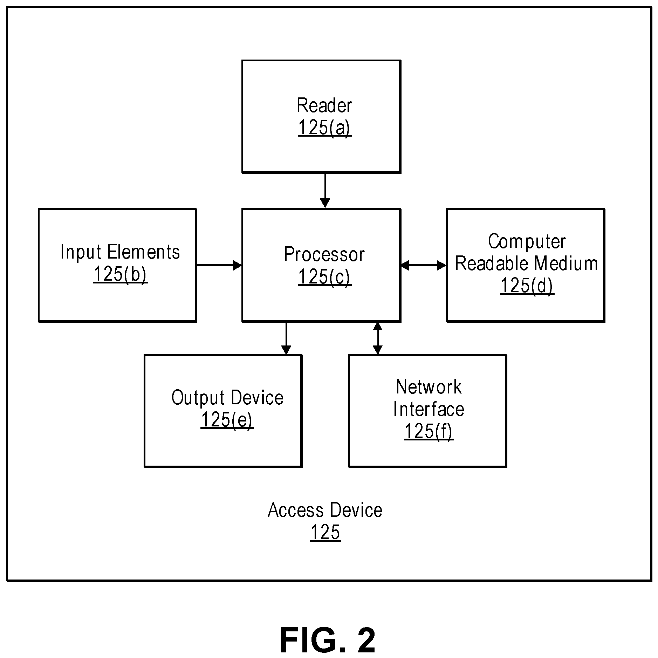

An example of the access device **125,** according to some embodiments of the invention, is shown in **FIG. 2****.** The access device **125** may comprise a processor **125(c)** operatively coupled to a computer readable medium **125(d)** (e.g., one or more memory chips, etc.), input elements **125(b)** such as buttons or the like, one or more readers **125(a)** (e.g., a contact chip reader, a contactless reader, a magnetic stripe reader, etc.), an output device **125(e)** (e.g., a display, a speaker, etc.) and a network interface **125(f).** A housing may house one or more of these components.

The computer readable medium **125(d)** may comprise instructions or code, executable by a processor. The instructions may include instructions for sending a command to a transaction device (or simulation device) upon making contact with that device, and instructions for communicating with the transaction device to obtain credentials and otherwise process a transaction. The computer readable medium **125(d)** may also include instructions for authorizing a transaction with the authorizing entity computer **160,** and instructions for any other suitable function as described herein.

Referring back to **FIG. 1****,** the transport computer **140** may be associated with an acquirer, which may typically be a business entity (e.g., a commercial bank) that has a business relationship with a particular merchant or other entity. Some entities can perform both issuer and acquirer functions. Some embodiments may encompass such single entity issuer-acquirers. The transport computer **140** may be more specifically referred to as an acquirer computer.

The transaction processing computer **150** may be disposed between the transport computer **140** and the authorizing entity computer **160.** The transaction processing computer **150** may include data processing subsystems, networks, and operations used to support and deliver authorization services, exception file services, and clearing and settlement services. For example, the transaction processing computer **150** may comprise a server coupled to a network interface (e.g., by an external communication interface), and databases of information. The transaction processing computer **150** may be representative of a transaction processing network. An exemplary transaction processing network may include VisaNet^{™}. Transaction processing networks such as VisaNet^{™} are able to process credit card transactions, debit card transactions, and other types of commercial transactions. VisaNet^{™}, in particular, includes a VIP system (Visa Integrated Payments system) which processes authorization requests and a Base II system which performs clearing and settlement services. The transaction processing computer **150** may use any suitable wired or wireless network, including the Internet.

The authorizing entity computer **160** may be associated with an authorizing entity, which may be an entity that authorizes a request. An example of an authorizing entity may be an issuer, which may typically refer to a business entity (e.g., a bank) that maintains an account for a user. An issuer may also issue and manage a payment account associated with a transaction device.

The transaction processing computer **150,** the transport computer **140,** and the authorizing entity computer **160** may operate suitable routing tables to route authorization request messages and/or authorization response messages using payment credentials, merchant identifiers, or other account identifiers.

The testing computer **170** may generate, store, and/or provide information about different transaction devices and test transactions. For example, the testing computer **170** may host a set of instructions for each test transaction, the instructions including a set of predefined input messages and corresponding predefined output messages. The testing computer **170** may be regularly updated with new or different test transactions.

The testing computer **170** may distribute the test transaction information to one or more simulation devices **120.** For example, the testing computer **170** may send (e.g., over-the-air) information about new test transactions, or instructions about which test transactions to execute. In some embodiments, the testing computer **170** may automatically update the instructions stored on the simulation device **120** (such as through a push functionality).

In some embodiments, the testing computer **170** may send the test transaction information to the simulation device **120** via the user device **115.** For example, the simulation device **120** may not be able to communicate over-the-air, and the simulation device **120** may not be located near the testing computer **170** (and thus may not be able to establish a physical communication connection). Instead, the testing computer **170** may send the test transaction information to the user device **115.** Then, the user device **115** can provide the test transaction information to the simulation device **120** by a physical communication connection (e.g., inserting the simulation device **120** into the user device **115),** by short-range contactless communication, or through any other suitable means of communication.

Both the user device **115** and the simulation device **120** may be operated by the user **110.** The user device **115** can be a mobile device, a laptop, desktop, wearable device, or any other suitable device.

As mentioned above, the simulation device **120** can simulate any suitable transaction device and/or transaction scenario. The below description will describe a scenario where the simulation device **120** is simulating a payment device and providing payment-related data to a merchant for a payment transaction. However, any other suitable type of device can be simulated, and any suitable type of information can be provided for any suitable type of transaction.

The simulation device **120** may receive and store instructions for conducting one or more test transactions. The instructions can include predefined input messages and output messages, such that the simulation device **120** can respond to a received input message with programmed output message. Accordingly, in some embodiments, the simulation device **120** may not need to generate a new output message, but can instead lookup an appropriate output message in a data table.

Embodiments allow the simulation device **120** to take the form of a smartcard. Also, the simulation device **120** may be able to communicate with the access device **125** via contact or contactless communication.

Different test transactions may be configured to test different transaction scenarios. For example, one test transaction may include instructions to send messages that simulate a normal transaction from a typical type of payment device (e.g., a Visa credit card). The test transaction may be designed to test whether or not the normal transaction is processed correctly. If an authorization response message is received at the access device **125** within a normal timeframe, the transaction system **100** may be considered to be functioning correctly. However, it is possible that the access device **125** or another component in the network is malfunctioning, and an error report may be received or the transaction rejected.

Another test transaction may simulate a malfunctioning payment device. For example, the simulation device **120** may send incorrect information, or may send information at the incorrect time. The test transaction may be run in order to observe how the access device **125** reacts to the malfunctioning payment device.

Transactions typically involve many messages, many forms of data exchange, and several components interacting in the transaction system. Accordingly, many test transactions can be designed that simulate different ways that a transaction device can malfunction, and/or that test how each component in the system handles different situations. The simulation device **120** can execute multiple transactions with the access device **125** in order to run on or more of the different test transactions.

The simulation device **120** can also receive a transaction report with details about the transaction. For example, the access device **125** can provide a transaction report that describes whether or not the transaction was successfully authorized, and that includes information about any processing errors or delays. In some embodiments, the transaction report may be typical information provided about authorization results.

The simulation device **120** may be able to display the transaction report to the user **110,** thereby informing the user **110** as to the outcome of each test transaction as well as reasons for failure or other issues. The simulation device **120** can also provide the transaction report to the user device **115** and/or testing computer **170** (e.g., via a cellular network, the internet, LAN, WLAN, USB interface, or other physical or wireless interface) for further analysis.

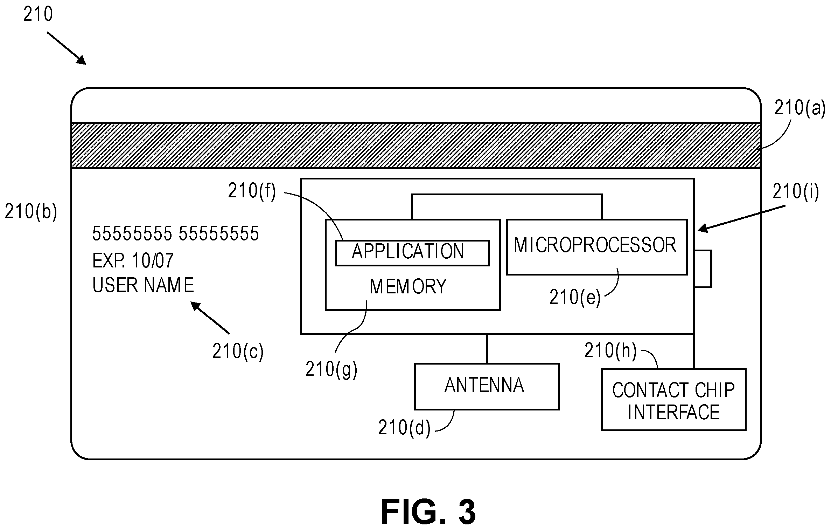

An example illustration of a simulation device **120** in the form of a smartcard **210** is shown in **FIG. 3****.** This smartcard **210** may simulate a payment card (e.g. a credit card, a debit card, or a prepaid card), an access card, an identification card, or any other suitable type of smartcard.

As shown in **FIG. 3****,** the smartcard **210** may include a contact interface **210(a),** such as a magnetic stripe and/or other contact means, such as a contact chip plate **210(h)** capable of both reading and writing data stored within the memory **210(g)** of the magnetic stripe of the card. In addition, the card may include a contactless interface, which in some embodiments may comprise an antenna **210(d)** coupled to an integrated circuit chip **210(i)** for wirelessly transmitting and receiving data stored on the card. It should be understood that the smartcard **210** may include any form of short range wireless communication capability. For example, the smartcard **210** can utilize RFID, Bluetooth^{™}, infra-red, or other data transfer capability that can be used to exchange data between the smartcard **210** and an access device **125.** In some embodiments an RF element may be used. In such embodiments, when the RF element is placed within an electric field generated by a POS terminal, the RF element may cause data associated with the contactless card (e.g., an account identifier or pre-programmed message) to be transmitted to the POS terminal.

In some embodiments, the smartcard **210** can include a printed, embossed, or otherwise displayed account identifier, expiration date **210(b),** user name **210(c),** and/or any other information associated with an account. This information could be associated with a testing account (which may or may not include real funds). Alternatively, a simulation device may not include these markings, and/or may display alternative information such as the phrase "test card."

The integrated circuit **210(i)** can include a microprocessor **210(e)** and a memory **210(g).** The memory **210(g)** can include one or more applications **210(f).** An example application **210(f)** is a simulation application. A simulation application can include instructions for conducting one or more test transactions, as well as information about the priority and ordering of the test transactions to be executed. As explained above, each test transaction can include a table of anticipated input messages and corresponding output messages to send in response. In some embodiments, the message tables for each test transaction can be stored in a test transaction database of the memory **210(g).** The memory **210(g)** can also store transaction reports with results for each test transaction.

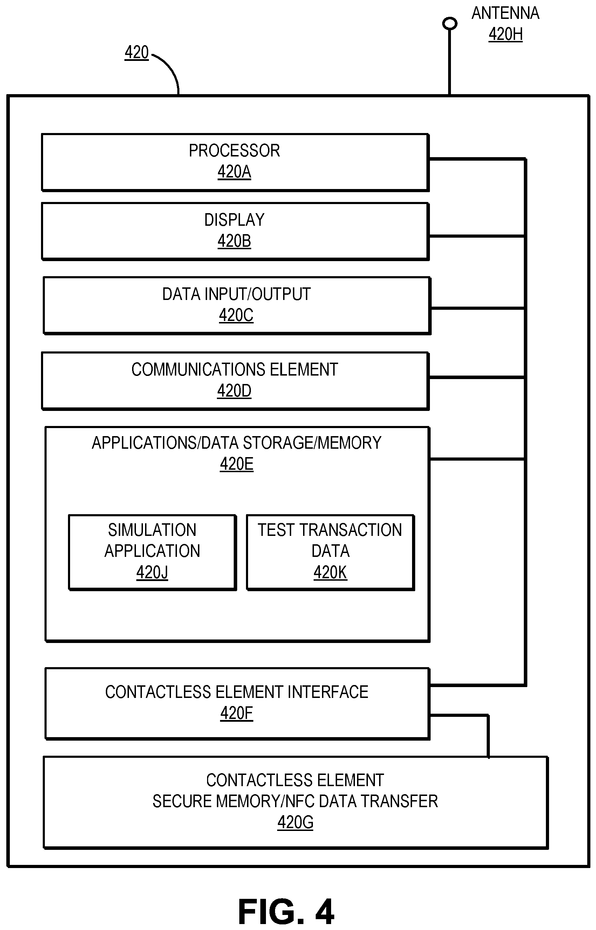

In a comparative example outside the scope of the invention, the simulation device **120** can take the form of a mobile device. **FIG. 4** shows an example illustration of a simulation device in the form of a mobile device **420.**

The mobile device **420** may include circuitry that is used to enable certain device functions, such as telephony. The functional elements responsible for enabling those functions may include a processor **420A** that can execute instructions that implement the functions and operations of the device. Processor **420A** may access memory **420E** (or another suitable data storage region or element) to retrieve instructions or data used in executing the instructions, such as mobile applications. Data input/output elements **420C,** such as a keyboard or touchscreen, may be used to enable a user to operate the mobile device **420** and input data (e.g., user authentication data). Data input/output elements may also be configured to output data (via a speaker, for example). Display **420B** may also be used to output data to a user. Communications element **420D** may be used to enable data transfer between mobile device **420** and a wired or wireless network (via antenna **420H,** for example) to assist in connectivity to the Internet or other network, and enabling data transfer functions. Mobile device **420** may also include contactless element interface **420F** to enable data transfer between contactless element **420G** and other elements of the device, where contactless element **420G** may include a secure memory and a near field communications data transfer element (or another form of short range communications technology).

The memory **420E** may comprise a simulation application **420J,** test transaction data **420K,** and any other suitable module or data. The mobile device **420** may have any number of mobile applications installed or stored on the memory **420E** and is not limited to that shown in **FIG. 4****.** The memory **420E** may also comprise code, executable by the processor **420A** for implementing a method comprising engaging in a transaction communication session with a computing device in order to observe how a transaction system reacts to a specific transaction scenario, the simulation device storing instructions for a test transaction, the instructions including a set of predefined output messages and predefined input messages configured to simulate the specific transaction scenario; receiving a transaction input message from the computing device; determining that the transaction input message matches a predefined input message; identifying a predefined output message based on the matched predefined input message; and sending the predefined output message to the computing device, wherein a transaction report is generated that indicates how the computing device reacted to the specific transaction scenario.

The simulation application **420J** may allow the mobile device **420** to simulate one or more transaction devices and/or transaction scenarios. The simulation application **420J** may be able to store and/or access test transaction data **420K.** The simulation application **420J** may be able to cause the mobile device **420** to activate a specific test transaction, receive an input message from an access device, identify a matching input message from a set of test transaction messages, select a corresponding output message, and send the output message to the access device. The simulation application **420J** may also include instructions for storing reports about an executed test transaction, such as information about data that was received from the access device (including each message and/or a transaction report), as well as information about unusual activity.

The test transaction data **420K** may include information for one or more test transactions. Each test transaction file can include a set of predefined input messages and a set of corresponding predefined output messages. Each test transaction may be configured to test a certain aspect of a transaction system, and/or the reaction of the access device to a certain set of messages (which may include inappropriate, missing, or disordered information).

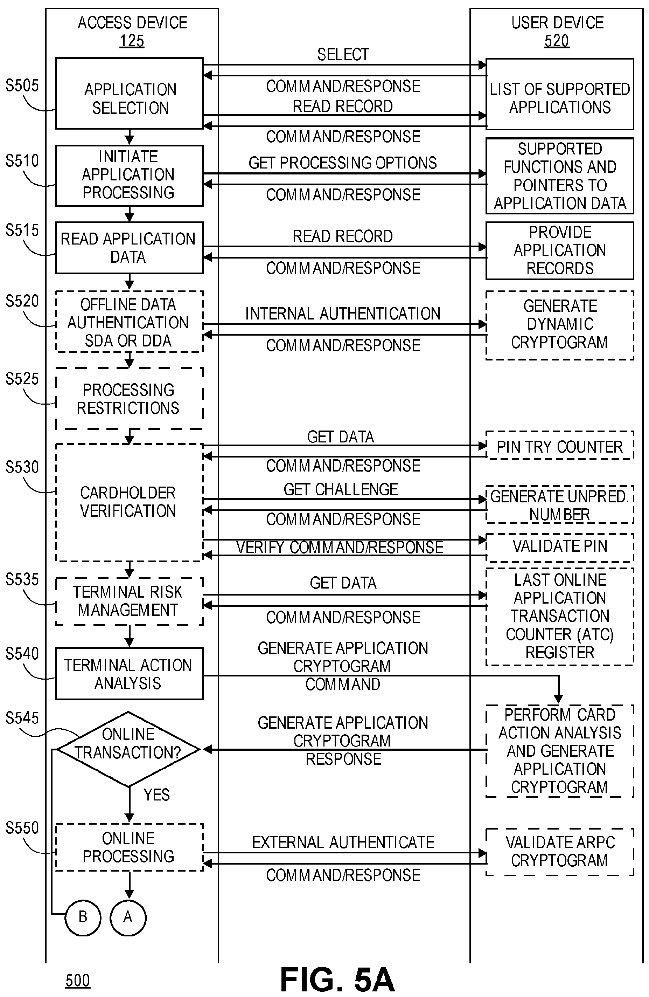

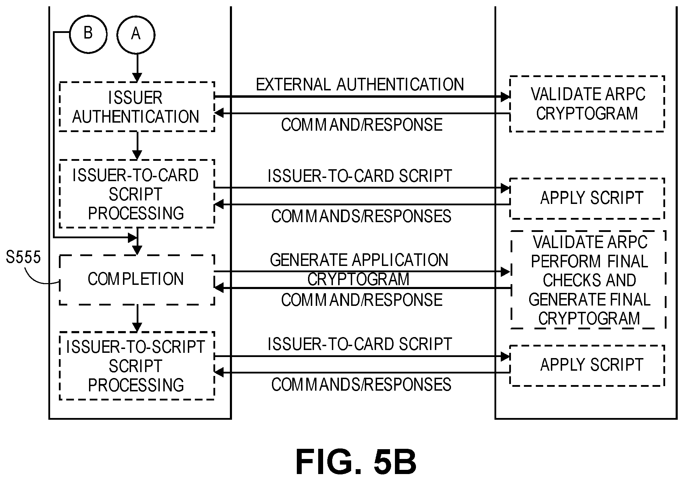

As mentioned above, transaction communications between a simulation device **120** and an access device **125** can include the exchange of several messages (in addition to messages sent to other components in the transaction system). These messages can take the form of APDU (application protocol data unit) messages. **FIGS. 5A-5B** shows an example APDU message exchange between a transaction device **520** and an access device **125,** according to embodiments of the invention.

The below APDU message flow is described for a normal transaction between a normal transaction device **520** and an access device **125.** However, embodiments allow the transaction device **520** to be replaced by a simulation device **120.** A simulation device **120** can simulate each of the below-described messages sent by the transaction device **520**. However, the simulation device **120** may not need to generate these messages. Instead, the simulation device **120** can have a table of predefined input messages and corresponding output messages. The simulation device can match a received command from the access device **125** to a predefined output message, and then send a corresponding output message back to the access device **125.**

In some embodiments, a predefined output message sent by the simulation device **120** simulates a normal response expected from a transaction device at that point. In other embodiments, the predefined output message may resemble an the expected response but include missing information or formatting errors. In further embodiments the predefined output message may not resemble an expected response at all. These predefined responses may be used to test the reaction of the access device **125** to errant information.

Continuing with the description of the typical APDU message exchange, when a transaction device **520** contacts (or establishes a contactless communication link) an access device **125,** the transaction device **520** and access device **125** are then able to communicate and exchange APDU messages. The messages can be in the form of APDU commands sent from the access device **125** to the transaction device **520**, and APDU responses sent from the transaction device **520** to the access device **125.** However, it should be understood that other messages, messaging protocols, or formats can be used to exchange the relevant information to conduct the transaction.

At step **S505**, the access device **125** may perform application selection. For example, the access device **125** may determine which applications are supported by both the transaction device **520** and the access device **125.** In some embodiments, when the access device **125** detects the presence of the transaction device **520**, the access device **125** may send an available applications request (which may be a "select command") to the user device **115** to request information on which payment applications (e.g., a list of AIDs) may be available at the transaction device **520**.

The transaction device **520** may respond by sending an available applications response back to access device **125.** The available applications response (which may be a "select response") may include a list of available AIDs (application identifiers).

The access device **125** may then select a suitable application from the list of applications received in the available applications response (e.g., by selecting an AID from the available AIDs). The access device **125** may also send an application selection message (which may be a "read record" or "select AID" command) with the selected AID to the transaction device **520**.

The transaction device **520** may then send a request (which may be a "read record response") for transaction data to the access device **125** which may be needed to execute the transaction using the selected application/AID. The request may include a list of transaction data identifiers, and the list can be in the form of a processing options data object list (PDOL).

At step **S510**, the access device **125** may initiate application processing. For example, the access device **125** may request that the transaction device **520** indicate the data (e.g., a list of files containing the data) to be used for the selected application and the functions supported. In some embodiments, the access device **125** may send a get processing options (GPO) command. The access device **125** may also provide transaction information to the transaction device **520** (e.g., via the GPO command).

The transaction device **520** may then generate dynamic transaction processing information using at least some of the received terminal transaction data, and send (via a "GPO response") a set of transaction processing information to the access device **125.** The transaction processing information may include one or more application file locators (AFLs) that can be used as file addresses by access device **125** to read account data stored on transaction device **520**.

At step **S515,** the access device **125** may read application data. For example, the access device **125** may send an account data request (which may be a "read record command") to the transaction device **520** to read account data stored at the transaction device **520**.

The transaction device **520** may then send the account data to the access device **125** (e.g., via a "read record response"). The account data may include, for example, track-2 equivalent data (e.g., an account identifier and/or other payment credentials) and the cardholder name, and/or other account related data that is accessible at the AFL location.

One or more steps of authentication and verification can be performed to validate that the transaction can proceed. For example, steps **S520-S540** provide various authentication processes. At step **S520**, the access device **125** may determine whether it should authenticate the transaction device **520** offline. At step **S525**, the access device **125** may check for processing restrictions. At step **S530**, the access device **125** may perform cardholder verification. At step **S535,** the access device **125** may perform terminal risk management (e.g., check for signs of fraud). At step **S540**, the access device **125** may perform a terminal action analysis. For example, the access device may determine whether the transaction should be approved offline, sent online for authorization, or declined offline.

The access device **125** may then request a cryptogram from the transaction device **520** (e.g., via a generate application cryptogram command). In some embodiments, an authorization request cryptogram (ARQC) may be requested for online authorization, a transaction certificate (TC) may be requested for offline authorization (e.g., already approved offline), and an application authentication cryptogram (AAC) may be requested for a transaction decline or an authorization deferral.

The transaction device **520** may then determine what type of cryptogram to provide to the access device. For example, the transaction device **520** may provide an ARQC to proceed with online authorization. Alternatively, the transaction device **520** may determine that the transaction should be declined, and may return an AAC.

At step **S545,** the access device **125** may receive the cryptogram from the transaction device **520** and determine whether to authorize the transaction online. In some embodiments, if an ARQC is received, the access device **125** may continue with an online authorization process.

At step **S550,** having obtained the requisite data, the access device **125** may then process the transaction online. For example the access device **125** may utilize some or all of the obtained data elements (e.g., from the transaction processing information and the account data) to generate a transaction authorization request message to request authorization of the transaction from the issuer (e.g., online authorization).

The access device **125** may send the authorization message to the authorizing entity computer via the transaction processing network for authorization (as explained above with respect to **FIG. 1****).** The access device **125** may receive a response with an authorization result and/or information about transaction processing issues.

At step **S555**, the access device **125** may complete the transaction communications. This can include providing the authorization result and/or any other transaction processing information to the transaction device **520**. The access device **125** may also request a second cryptogram from the transaction device **520** (e.g., using a second generate application cryptogram command). If the transaction was successfully authorized, the access device **125** may indicate so by requesting a TC. Once the transaction device **520** provides the second cryptogram (e.g., via a generate application cryptogram response), it may complete its internal processing and revert to a default state, thereby becoming ready for removal from the access device **125** and ready for a subsequent transaction.

Embodiments allow the simulation device **120** to simulate this entire exchange, as well as intentionally change the information or message format for each step (as well as skip a step). As described above, embodiments advantageously allow the simulation device **120** to send predefined messages based on the information received from the access device **125.** As a result, when simulating a certain transaction device, the simulation device **120** may not need to have a copy of that transaction device's actual logic for generating messages. Instead, the simulation device **120** can be pre-loaded with the type of message that might be sent by that transaction device. From the perspective of the access device **125,** the simulation device **120** is operating in the same way as the transaction device. However, the logic and programming of the transaction device may be kept secret and secure, and the simulation device **120** may be sending predefined messages.

Similarly, the simulation device **120** can be loaded with predefined messages that include errors. This allows the simulation device **120** to test the access device's reaction to errant messages. Using predefined messages for this application is particularly useful, as a transaction device's typical logic and programming would need to be altered to create a test scenario with errant data. Extensive human work would be needed to change the logic for each transaction device that the simulation device **120** is simulating.

Each test transaction can include a set of predefined input messages, each of which may be tied to a (same or different) predefined output message. Thus, depending on what input message is received at the simulation device **120,** a certain output message is sent back to the access device **125.**

As an example, a certain test transaction can have different predefined select responses (see step **S505** in **FIG. 5A****)** that can be sent depending on exactly what the access device **125** sends in the select command. If the incoming select command is "00a4040007A0000000031010," the corresponding predefined select response may be "6f098407a00000000310109000." Other select responses may be sent for different select commands (e.g., select commands with different values in one or more select command data fields).

Similarly, if a read record command sent by the access device **120** to the simulation device **120** is "00B2020C00," the simulation device **120** may identify that this input calls for a read record command of "702657134761739001010010d20122011." Then, the access device **120** may send a GPO command of "80A80000028300." This GPO command may match a predefined input message, so the simulation device **120** may send a corresponding predefined output message of the GPO response, which may be "800e3800080202001001020018010201."

In some embodiments, a test transaction may correlate multiple input messages with the same predefined output message. For example, the simulation device **120** may respond with the same exact read record response (e.g., the same items listed in a processing options data object list), regardless of which AID is indicated in a read record command. As another example, the test transaction may be configured to test the access device's response to a decline from the transaction device. Accordingly, the simulation device **120** may indicate that the transaction is declined in the generate application cryptogram response regardless of what transaction amount is sent by the access device **125** in the generate application cryptogram command (i.e., the transaction amount may be ignored).

The simulation device **120** may be programmed to group multiple potential input messages together in this manner by ignoring or masking specific data fields in a received message. In one example, the first two characters in the select command may be masked or ignored. As a result, all of the following possible select command messages may be considered the same message by the simulation device **120,** since the only difference between them is the first two characters:
00a4040007A0000000031010
01a4040007A0000000031010
02a4040007A0000000031010
03a4040007A0000000031010
In this example, the same predefined output message (which may be "6f098407a00000000310109000") is sent regardless of which of the above messages are received.

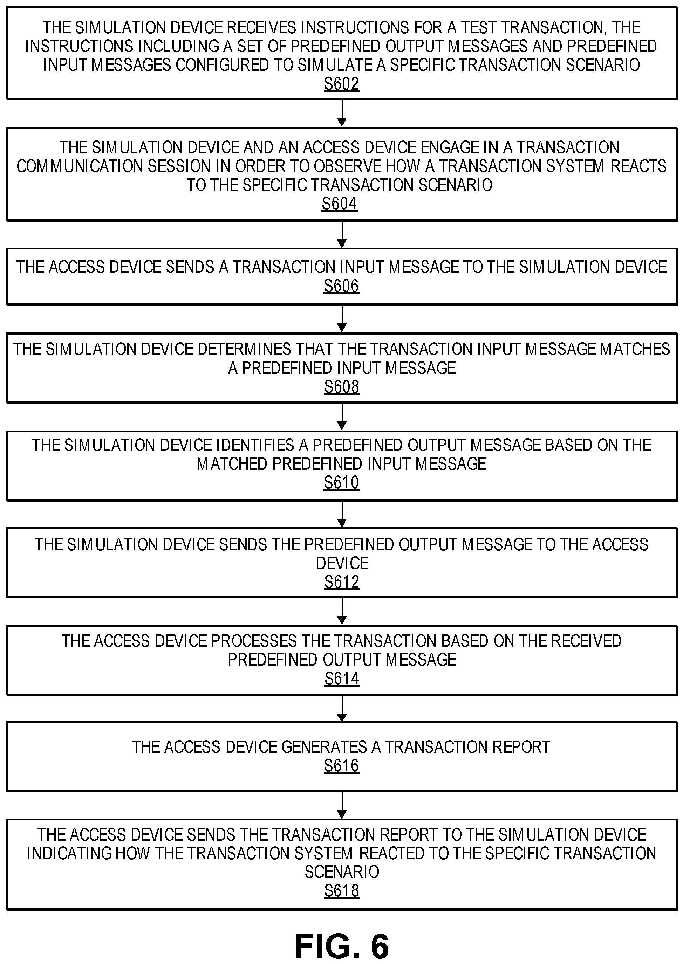

A method **600** according to embodiments of the invention can be described with respect to **FIG. 6****.** Some elements in other Figures are also referred to. The steps shown in the method **600** may be performed sequentially or in any suitable order in embodiments of the invention. In some embodiments, one or more of the steps may be optional.

The various messages described below may use any suitable form of communication. In some embodiments, a request or response may be in an electronic message format, such as an e-mail, a short messaging service (SMS) message, a multimedia messaging service (MMS) message, a hypertext transfer protocol (HTTP) request message, a transmission control protocol (TCP) packet, a web form submission. The request or response may be directed to any suitable location, such as an e-mail address, a telephone number, an internet protocol (IP) address, or a uniform resource locator (URL). In some embodiments, a request or response may comprise a mix of different message types, such as both email and SMS messages.

In the following flow, a simulation device **120** interacts with an access device **125** for a transaction. However, an access device may be one type of computing device, and the simulation device **120** may be able to interact in this manner with any other suitable type of computing device. Any computing device that interacts with another device (e.g., a transaction device) can be tested by the simulation device **120** to determine how the computing device reacts to different messages and scenarios. For example, a computing device that is a part of a geo-location system can communicate with other similar devices to locate a mobile device. This type of computing device can be tested with the simulation device **120** to observe how it communicates with other computing devices and a mobile device. More specifically, the simulation device **120** can test whether the computing device correctly calculates a distance to a mobile device based on over-the-air communications, as well as whether the computing device provides the distance information when prompted.

Additionally, a simulation device **120** may be able to interact with an access device **125** to simulate one or more test transactions. The following flow describes testing different payment transaction scenarios. However, any other suitable type of transaction can be tested, such as an access transaction or an identity verification transaction.

The simulation device **120** may be located at a merchant storefront or other field-testing location. A testing computer **170** with updated and current test transaction instructions may be located in a central testing facility away from the simulation device **120.** However, the testing computer **170** may be able to send new or updated test transaction information to the simulation device **120.**

At step **S602**, the simulation device **120** may send a request to the testing computer 170 for some or all of the test transaction data. This request may establish a communications session between the simulation device **120** and the testing computer **170.** The testing computer **170** may then provide instructions for one or more test transactions to the simulation device **120**. The instructions for each test transaction can include a set of predefined output messages and a set of predefined input messages, where each predefined input message is associated with a specific predefined output message. Each transaction can be configured to simulate a specific transaction scenario.

Having received the test transaction instructions, the simulation device **120** can be ready for conducting one or more test transactions. The simulation device **120** may inform the user **110** that the simulation device **120** is ready for testing, and may prompt the user **110** to insert the simulation device **120** into the access device **125.** The user **110** may then present the simulation device **120** to an access device **125** at a merchant storefront for a test transaction. The user **110** may select one or more test transactions to conduct, or the simulation device **120** may automatically conduct a set of test transactions indicated by the testing computer **170**.

At step **S604**, the simulation device **120** may establish communication with an access device **125** (e.g., via contact or short-range contactless communication). A transaction communication session may be initiated, during which the simulation device **120** may execute instructions for a first test transaction. The first test transaction may be designed to simulate a first transaction scenario, and to test the access device's reaction to the first transaction scenario.

During the transaction communication session, the access device **125** may send several messages to the simulation device **120,** and the simulation device **120** may respond with several messages to the access device **125.** These messages can include APDU commands and responses. Steps **S606-S612** describe one set of exchanged messages. However, several iterations of message exchange can take place.

At step **S606**, the access device **125** may send a transaction input message to the simulation device **120.** The transaction input message may be an APDU command, such as a select command, a read record command, a GPO command, a get data command, a generate application cryptogram command, or any other suitable message.

At step **S608**, the simulation device **120** may receive the transaction input message and compare the transaction input message to the predefined input messages for the current test transaction in order to identify any possible matches. The simulation device **120** may then determine that the transaction input message matches a predefined input message.

At step **S610,** the simulation device **120** can identify a predefined output message based on the matched predefined input message. For example, the predefined input message may be associated with a certain predefined output message.

At step **S612**, the simulation device **120** may send the predefined output message to the access device **125.**

At step **S614,** the access device **125** can continue with processing the transaction based on the received output message. For example, the access device **125** may still need further information from the simulation device **120,** so the access device **125** can send one or more additional messages to the simulation device **120.** Once the access device **125** receives all the necessary transaction information, the access device **125** may use the information to send an authorization request message to an issuer. Alternatively, the test transaction may be declined and stop at any time (e.g., during an test transaction that includes intentionally incorrect output messages).

During transaction processing and message exchanges, the access device **125** may keep track of any processing errors, delays, or unusual circumstances. For example, the access device **125** may log unexpected or missing information from the simulation device **120,** as well as what the access device **125** did in response. The access device **125** may also record information about how the authorization request message sent to the issuer was processed.

At step **S616,** the access device **125** may generate a transaction report for the first transaction. The transaction report can indicate whether or not the transaction was authorized. The transaction report can also include a communication log and information about how the transaction was processed, such as how the entire transaction system reacted to the specific transaction scenario, whether transaction processing was normal, and/or if there were unusual circumstances or errors. Each entity in the system (e.g., the issuer, transaction processing network, etc.) may inform the access device **125** if any processing issues occurred (e.g., via an authorization response message).

At step **S618,** the access device **125** may send the transaction report to the simulation device **120.** The access device **125** can prompt the user **110** to present (e.g., tap or insert) the simulation device **120** to the access device **125** again to receive the transaction report. As a result, the simulation device **120** may obtain detailed information about how the transaction was processed from each component in the transaction system.

In some embodiments, the simulation device **120** may also create its own transaction report for the first test transaction. For example, the simulation device **120** may note how the access device **125** responded to each simulation device response message (e.g., what information the access device **125** subsequently provided and/or requested). The simulation device **120** may also track any delays, unexpected events, inappropriate access device **125** actions, and transaction successes/failures.

Once the test transaction is completed, one or more additional steps can take place. For example, in some embodiments, the simulation device **120** may send the transaction report and any other suitable information to the testing computer **170.** The testing computer **170** may receive this transaction report as well as other transaction reports for the same test transaction from other simulation devices in other locations. As a result, the testing computer 170 can have a large amount of data for identifying trends and possible systemic errors.

Additionally, the user **110** may review the transaction report and identify any possible local errors at the access device **125.** For example, the user **110** may view an access device **125** display that indicates a transaction approval, decline, or other error message. The user **110** may be able to take immediate action to fix or adjust the access device **125,** changing settings or fixing program errors.

The user **110** may also review transaction logs stored locally at other components in the transaction system (e.g., the issuer computer, transaction processing computer, merchant computer, or acquirer computer). For example, the user **110** may remotely login to these computers (e.g., via the user device **115)** and access a transaction database for each computer. The user **110** may thereby be able to locate more information about transaction processing issues, determine whether the transaction data was correctly processed at each point in the network, and/or determine whether the authorization response messages and authorization request messages were correctly routed to and from the issuer computer.

Having completed the first test transaction, the simulation device **120** may then initiate a second transaction communication session with the access device **125** in order to run a second test transaction. The user **110** may select the next test transaction, or the next queued transaction can automatically initiate (e.g., without removing the simulation device **120** from the access device **125).** The process can be repeated any number of times until all of the desired test transactions have been completed. A number of test transactions can be performed that simulate different transaction scenarios and/or different transaction devices.

Accordingly, the simulation device **120** can simulate a specific transaction scenario as well as the responses of a specific transaction device that is not actually involved in the transaction. The simulation device **120** can accomplish this simulation without needing the actual logic used in the actual transaction device, as the simulation device **120** can instead send predefined responses that are consistent with the typical use of the transaction device (because they were designed to simulate the transaction device).

In some embodiments, the user device **115** may serve as an intermediary between the testing computer **170** and the simulation device **120.** For example, at step **S602**, the testing computer **170** may provide the test transaction instructions to the user device **115,** which can in turn provide the test transaction instructions to the simulation device **120.** For example, the user **110** may physical contact the simulation device **120** to the user device **115** for loading instructions. Additionally, after receiving a transaction report from the access device **125,** the simulation device **120** may provide the transaction report to the user device **115,** which can then forward the reports to the testing computer **170.**

As explained above, the test transactions can simulate a number of different transaction scenarios. This includes transaction scenarios where a transaction device is behaving unusually (to observe how the access device **125** reacts). While many transaction scenarios are possible, some specific examples will now be described for illustrative purposes.

Test transactions can be designed to test whether different types of transaction devices work for a given access device **125** at a merchant location. For example, a first test transaction can simulate a VISA credit card, and therefore the select response carries a VISA AID (application identifier). A second test transaction for simulating a different type of credit card has a different type of AID.

Another test transactions is designed to make sure an access device **125** reacts appropriately for transaction devices that are only meant to work for online authorization. Accordingly, the test transaction sends an ARQC in the generate application cryptogram response. Another test transaction for testing offline authorization only cards will send a TC in the generate application cryptogram response.

A test transactions that is designed to test whether a tokenized transaction is processed appropriately can send a payment token in the read record response. A test transaction designed to test how a transaction network handles a certain type of cryptogram (e.g., cryptogram version number 22, or cryptogram version number 18) can send a "22" or "18" in the CVN field of the issuer application data (e.g., in a generate application cryptogram response).

Additional test transactions can be designed to target specific transaction processing functions at the acquirer computer, the merchant computer, the transaction processing computer, and/or the issuer computer.

Other test transactions can be designed to simulate negative test cases (e.g., test transactions with intentional errors). It is advantageous to know how the access device **125** (or other parts of the transaction system) react when a transaction device provides bad information. Negative test cases provide this information and enable users to make changes if needed. The following are examples of negative test cases.

As a first example, a test transaction is designed to test the access device's response when a transaction device fails to provide a currency code. When simulating this scenario, the simulation device **120** sends mostly expected and normal APDU responses. However, one specific response message, the "read record" response, is missing the currency code data field.

For example, a normal read record response may be constructed as:
702B57134761739001010010d20122011234599999991f5f200e4e616d65306 9
6e205265636f72649f420208409000
However, the read record response sent during the test transaction may be different in that it does not include the data field that is struck-through here:
702657134761739001010010d20122011234599999991f5f200e4e616d65306 9
6e205265636f72649000
Here, "9f42" (beginning of missing data) is a tag indicating a currency code follows, "02" is a length of the following currency code, and "0840" (remainder of missing data) is the currency code.

The access device **125** may be designed such that it can continue with transaction processing as normal, even if this currency code is missing. Thus, this test transaction can be used to determine whether or not the access device **125** is actually able to proceed as intended when the currency code was not provided. It is possible that the access device **125** will instead reject the transaction, stall until a time-out occurs, experience a processing delay, or otherwise behave in an undesired manner. It is also possible that other components down the line (e.g., the issuer computer or transaction processing computer) will have problems. The user 110 can observe any issues and take necessary corrective measures.

As a second example, a test transaction is designed to test the access device's response when a transaction device provides an invalid SDAD (Signed Dynamic Application Data). Similarly, when simulating this scenario, the simulation device **120** sends mostly expected and normal APDU responses. However, one specific response message, the "get processing options" response, has a value in SDAD data field with an incorrect length, incorrect format, or an otherwise inappropriate value.

For example, a normal SDAD data field may be constructed as "9F4B404B54..." However, an SDAD field could be wrongly encoded, and thereby be changed and miss the two bytes "4B54," such that the SDAD data field in the test transaction's GPO response is "9F4B3D..."

Again, it may be desirable for the access device **125** (and other parts of the transaction system) to react to this situation in a certain way. For example, it may be best for the access device **125** to continue with the transaction, to decline the transaction, to ask for more information from the simulation device **120,** to flag the incorrect SDAD in an authorization request message, or to take any other suitable action. The simulation device **120** or other component in the transaction system may log what happens, and the user **110** and/or testing computer **170** can observe the results.

A normal transaction device cannot be used to run these negative test cases, as it would behave normally (e.g., it would actually send the currency code and a valid SDAD). To run these test transactions without the simulation device, a special transaction device with manipulated logic (for not sending a currency code or for sending an invalid SDAD) would have to be created. Thus, it is advantageous to run a negative test case with a simulation device **120** as described above, as it is less laborious to design a predefined output message with a missing currency code. Especially when the negative test case is being tested for multiple types of transaction devices.

Embodiments of the invention also enable the user **110** to control the simulation device **120** in several ways. For example, the user **110** can create a specific test transaction instead of receiving all test transaction instructions from the testing computer **170.** The user **110** can program the simulation device **120** directly on a simulation device **120** interface, or indirectly through the user device **115.** The interface may include several options, such as a "select" command, a "set" command, a "read log" command, a "program" command, and a "switch out" command.

The select command allows the user **110** to select a test transaction to adjust or to create a new test transaction. Then the user **110** can also specify which APDU message to augment.

The program command allows the user **110** to specify how an APDU message is changed (e.g., what data fields to augment). For example, the user **110** can specify the predefined output messages to send for different input messages. More broadly, the user **110** can specify messages to remove, communication delays to incorporate, or any other suitable part of the test transaction to change.

Several set commands enable the user **110** to set various simulation device **120** parameters. For example, one set command switches the simulation device **120** (e.g., an application on a mobile device) from a programmable mode to a testing mode, such that a test can be started. Other set command can be used to clear previous test transaction instructions, enable transaction communication logging, or disable communication logging.

The switch out command allows the user **110** to switch the simulation device **120** out of the testing mode and back to the programmable mode.

The read log command allows the user **110** to obtain and view a transaction report or log from a previous testing session (e.g., provided communication logging is enabled during the set command). The user **110** can then review results from the previous test.

Embodiments of the invention have a number of advantages. For example, in embodiments of the invention, a single simulation device can be used to test how an access device reacts to any suitable number of different transaction devices and transaction scenarios. Thus, there is no need to physically send a plurality of different sample transaction devices for testing, as all the tests can be conveniently conducted using the single simulation device.

Also, when new transaction devices are made or other updates take place, updated test transaction instructions can be sent to a remotely-located simulation device that is already in the field. As a result, additional physical devices need not be distributed. Additionally, the most up-to-date transaction devices and test cases can be simulated immediately, without waiting for any physical distributions.

Embodiments of the invention also advantageously simplify the testing process, so that a skilled technical worker is not needed for conducting the test transactions. The simulation device can be loaded with all necessary information for running one or more test transactions and automatically conduct the test transactions when inserted into (or placed near) an access device. In other words, the user can facilitate all the test by simply placing the simulation device at the access device. The simulation device can also log information about each test, and forward the data to a central testing computer. With data from multiple simulation devices in a multiple places, it is easier to determine problems for a transaction device as well as develop possible corrections.

Embodiments of the invention further advantageously allow a transaction device to be simulated without using the transaction device logic, programming, or other configurations. Instead, predefined output messages (which are typically public and not confidential) can be built to simulate a message that would be sent by that transaction device. In other words, the simulation device can simulate the functionality of the transaction device (from the perspective of the access device) and provide feedback about how that transaction device would work without exposing the transaction device logic. As a result, security is improved and cards with confidential logic can be tested.

Embodiments of the invention also advantageously allow negative test cases to be conducted. Faulty transaction devices can be tested without having to actually create a faulty transaction device (which would involve changing the transaction device's logic and programming), as a set of predefined messages can be used instead of faulty device logic. This opens up a number of newly possible test cases, and thereby provides new information about how a transaction system functions. Instead of just making sure that a transaction device works properly, the outcomes of defective transaction devices can be also be observed. Previously unknown errors and inefficiencies can be identified and resolved.

A computer system will now be described that may be used to implement any of the entities or components described herein. Subsystems in the computer system are interconnected via a system bus. Additional subsystems include a printer, a keyboard, a fixed disk, and a monitor which can be coupled to a display adapter. Peripherals and input/output (I/O) devices, which can couple to an I/O controller, can be connected to the computer system by any number of means known in the art, such as a serial port. For example, a serial port or external interface can be used to connect the computer apparatus to a wide area network such as the Internet, a mouse input device, or a scanner. The interconnection via system bus allows the central processor to communicate with each subsystem and to control the execution of instructions from system memory or the fixed disk, as well as the exchange of information between subsystems. The system memory and/or the fixed disk may embody a computer-readable medium.

As described, the inventive service may involve implementing one or more functions, processes, operations or method steps. In some embodiments, the functions, processes, operations or method steps may be implemented as a result of the execution of a set of instructions or software code by a suitably-programmed computing device, microprocessor, data processor, or the like. The set of instructions or software code may be stored in a memory or other form of data storage element which is accessed by the computing device, microprocessor, etc. In other embodiments, the functions, processes, operations or method steps may be implemented by firmware or a dedicated processor, integrated circuit, etc.

Any of the software components or functions described in this application may be implemented as software code to be executed by a processor using any suitable computer language such as, for example, Java, C++ or Perl using, for example, conventional or object-oriented techniques. The software code may be stored as a series of instructions, or commands on a computer-readable medium, such as a random access memory (RAM), a read-only memory (ROM), a magnetic medium such as a hard-drive or a floppy disk, or an optical medium such as a CD-ROM. Any such computer-readable medium may reside on or within a single computational apparatus, and may be present on or within different computational apparatuses within a system or network.

While certain exemplary embodiments have been described in detail and shown in the accompanying drawings, it is to be understood that such embodiments are merely illustrative of and not intended to be restrictive of the invention which is defined in the appended claims.

As used herein, the use of "a", "an" or "the" is intended to mean "at least one", unless specifically indicated to the contrary.

## Claims

1. A method comprising:
receiving, at a simulation device (120), a plurality of instruction sets from a testing computer (170), each instruction set corresponding to a different test transaction for a different transaction scenario, the instruction set for each test transaction including a set of predefined output messages and predefined input messages configured to simulate a corresponding transaction scenario;
storing, by the simulation device (120), the plurality of instruction sets for the plurality of test transactions;
engaging, by the simulation device (120), in a transaction communication session with a computing device (125) in order to observe how a transaction system reacts to a specific transaction scenario;
receiving, by the simulation device (120), a transaction input message from the computing device (125);
determining, by the simulation device (120), that the transaction input message matches a predefined input message;
identifying, by the simulation device (120), a predefined output message based on the matched predefined input message, wherein the predefined output message includes an intentional error in formatting or content;
sending, by the simulation device (120), the predefined output message to the computing device (125); and
receiving, by the simulation device (120), a transaction report that indicates how the computing device (125) reacted to the specific transaction scenario,
wherein the simulation device is in the form of a smartcard (210) having memory (210g) storing a simulation application (210(f)) including the plurality of instructions sets for the plurality of test transactions.

2. The method of claim 1, wherein the transaction system reacts by rejecting the transaction due to the error in formatting or content.

3. The method of claim 1, wherein the set of predefined output messages simulates a certain type of a transaction device.

4. The method of claim 3, wherein the transaction device is a payment device.

5. The method of claim 4, wherein the computing device is an access device in the form of a POS device.

6. The method of claim 5, wherein the transaction input message and the predefined output message are an APDU messages.

7. A simulation device in the form of a smartcard (210) comprising:
a processor; and
a computer readable medium, the computer readable medium comprising code, executable by the processor, for implementing a method according to any of the preceding claims.

## Patentansprüche

1. Verfahren, Folgendes umfassend:
Empfangen, an einer Simulationsvorrichtung (120), einer Vielzahl von Befehlssätzen von einem Testcomputer (170), wobei jeder Befehlssatz einer unterschiedlichen Testtransaktion für ein unterschiedliches Transaktionsszenario entspricht, wobei der Befehlssatz für jede Testtransaktion einen Satz von vordefinierten Ausgabenachrichten und vordefinierten Eingabenachrichten umfasst, die eingerichtet sind, ein entsprechendes Transaktionsszenario zu simulieren;
Speichern, durch die Simulationsvorrichtung (120), der Vielzahl von Befehlssätzen für die Vielzahl von Testtransaktionen;
Teilnehmen, durch die Simulationsvorrichtung (120), an einer Transaktionskommunikationssitzung mit einer Computervorrichtung (125), um zu beobachten, wie ein Transaktionssystem auf ein spezifisches Transaktionsszenario reagiert;
Empfangen, durch die Simulationsvorrichtung (120), einer Transaktionseingabenachricht von der Computervorrichtung (125);
Bestimmen, durch die Simulationsvorrichtung (120), dass die Transaktionseingabenachricht mit einer vordefinierten Eingabenachricht übereinstimmt;
Identifizieren, durch die Simulationsvorrichtung (120), einer vordefinierten Ausgabenachricht basierend auf der übereinstimmenden vordefinierten Eingabenachricht, wobei die vordefinierte Ausgabenachricht einen beabsichtigten Fehler bei der Formatierung oder dem Inhalt aufweist;
Senden, durch die Simulationsvorrichtung (120), der vordefinierten Ausgabenachricht an die Computervorrichtung (125); und
Empfangen, durch die Simulationsvorrichtung (120), eines Transaktionsberichts, der angibt, wie die Computervorrichtung (125) auf das spezifische Transaktionsszenario reagiert hat,
wobei die Simulationsvorrichtung in Form einer Smartcard (210) vorliegt, die einen Speicher (210g) aufweist, der eine Simulationsanwendung (210(f)) speichert, die die Vielzahl von Befehlssätzen für die Vielzahl von Testtransaktionen umfasst.

2. Verfahren nach Anspruch 1, wobei das Transaktionssystem reagiert, indem es die Transaktion aufgrund des Formatierungs- oder Inhaltsfehlers ablehnt.

3. Verfahren nach Anspruch 1, wobei der Satz von vordefinierten Ausgabenachrichten einen bestimmten Typ einer Transaktionsvorrichtung simuliert.

4. Verfahren nach Anspruch 3, wobei die Transaktionsvorrichtung eine
Zahlungsvorrichtung ist.

5. Verfahren nach Anspruch 4, wobei die Computervorrichtung eine Zugriffsvorrichtung
in Form einer POS-Vorrichtung ist.

6. Verfahren nach Anspruch 5, wobei die Transaktionseingabenachricht und die
vordefinierte Ausgabenachricht APDU-Nachrichten sind.

7. Simulationsvorrichtung in Form einer Chipkarte (210), umfassend:
einen Prozessor; und
ein computerlesbares Medium, wobei das computerlesbare Medium Code umfasst, der durch den Prozessor ausführbar ist, um ein Verfahren nach einem der vorstehenden Ansprüche zu implementieren.

## Revendications

1. Procédé comprenant :
la réception, au niveau d'un dispositif de simulation (120), d'une pluralité d'ensembles d'instructions provenant d'un ordinateur de test (170), chaque ensemble d'instructions correspondant à une transaction de test différente pour un scénario de transaction différent, l'ensemble d'instructions pour chaque transaction de test comportant un ensemble de messages de sortie prédéfinis et de messages d'entrée prédéfinis configurés pour simuler un scénario de transaction correspondant ;
le stockage, par le dispositif de simulation (120), de la pluralité d'ensembles d'instructions pour la pluralité de transactions de test ;
l'engagement, par le dispositif de simulation (120), dans une session de communication de transaction avec un dispositif informatique (125) afin d'observer la manière dont un système de transaction réagit à un scénario de transaction spécifique ;
la réception, par le dispositif de simulation (120), d'un message d'entrée de transaction provenant du dispositif informatique (125) ;
la détermination, par le dispositif de simulation (120), que le message d'entrée de transaction concorde avec un message d'entrée prédéfini ;
l'identification, par le dispositif de simulation (120), d'un message de sortie prédéfini sur la base du message d'entrée prédéfini concordant, dans lequel le message de sortie prédéfini comporte une erreur intentionnelle de formatage ou de contenu ;
l'envoi, par le dispositif de simulation (120), du message de sortie prédéfini au dispositif informatique (125) ; et
la réception, par le dispositif de simulation (120), d'un rapport de transaction qui indique la manière dont le dispositif informatique (125) a réagi au scénario de transaction spécifique,
dans lequel le dispositif de simulation se présente sous la forme d'une carte à puce (210) ayant une mémoire (210g) stockant une application de simulation (210(f)) comportant la pluralité d'ensembles d'instructions pour la pluralité de transactions de test.

2. Procédé selon la revendication 1, dans lequel le système de transaction réagit en rejetant la transaction en raison de l'erreur de formatage ou de contenu.

3. Procédé selon la revendication 1, dans lequel l'ensemble de messages de sortie prédéfinis simule un certain type de dispositif de transaction.

4. Procédé selon la revendication 3, dans lequel le dispositif de transaction est un dispositif de paiement.

5. Procédé selon la revendication 4, dans lequel le dispositif informatique est un dispositif d'accès sous la forme d'un dispositif POS.

6. Procédé selon la revendication 5, dans lequel le message d'entrée de transaction et le message de sortie prédéfini sont des messages APDU.

7. Dispositif de simulation sous la forme d'une carte à puce (210) comprenant :
un processeur ; et
un support lisible par ordinateur, le support lisible par ordinateur comprenant un code, exécutable par le processeur, destiné à mettre en œuvre un procédé selon l'une quelconque des revendications précédentes.
